(19) Europäisches Patentamt
European Patent Office
Office européen des brevets

(11) EP 4 001 343 B1

(12) **EUROPEAN PATENT SPECIFICATION**

(45) Date of publication and mention of the grant of the patent:
**05.07.2023 Bulletin 2023/27**

(21) Application number: **20839976.6**

(22) Date of filing: **08.07.2020**

(51) International Patent Classification (IPC):
***C08G 63/672*** *(2006.01)*

(52) Cooperative Patent Classification (CPC):
**C08G 63/672**

(86) International application number:
**PCT/JP2020/026649**

(87) International publication number:
**WO 2021/010242 (21.01.2021 Gazette 2021/03)**

# (54) POLYESTER RESIN, AND MOLDED ARTICLE, STRETCHED FILM AND BOTTLE COMPRISING THE SAME

POLYESTERHARZ UND GEFORMTER GEGENSTAND, STRECKFOLIE UND FLASCHE ENTHALTEND DIESES HARZ

RÉSINE DE POLYESTER, ET ARTICLE MOULÉ, FILM ÉTIRÉ ET BOUTEILLE COMPRENANT CETTE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.07.2019 JP 2019131846**

(43) Date of publication of application:
**25.05.2022 Bulletin 2022/21**

(73) Proprietor: **Mitsubishi Gas Chemical Company, Inc.**
**Tokyo 100-8324 (JP)**

(72) Inventors:
- **MORISHITA, Takami**
  **Hiratsuka-shi, Kanagawa 254-0016 (JP)**
- **ADACHI, Kouki**
  **Hiratsuka-shi, Kanagawa 254-0016 (JP)**
- **NAGAI, Masayuki**
  **Hiratsuka-shi, Kanagawa 254-0016 (JP)**

(74) Representative: **Vossius & Partner**
**Patentanwälte Rechtsanwälte mbB**
**Siebertstraße 3**
**81675 München (DE)**

(56) References cited:
**JP-A- 2012 512 936**
**JP-A- 2017 105 873**
**JP-A- 2017 105 873**
**US-A1- 2010 160 549**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 001 343 B1

## Description

### Technical Field

The present invention relates to a polyester resin, and a molded article, a stretched film and a bottle comprising the polyester resin.

### Background Art

Aromatic saturated polyester resins, particularly polyethylene terephthalate (hereinafter, referred to as "PET" in some cases) is a resin with well-balanced mechanical performance, solvent resistance, aroma retention, weather resistance, recyclability and the like, and is broadly used mainly in applications including bottles, films and the like. However, PET has points to be improved in heat resistance. That is, PET, which has a glass transition temperature of about 80°C, can be said to be unsuitable to applications requiring high heat resistance and transparency, such as products to be used in cars, packing materials for export/import, food packing materials to be subjected to retort treatment or microwave oven heating, and nursing bottles and tableware to be subjected to heat sterilization.

Against this, PET improved in heat resistance includes PET copolymerized with 3,9-bis(1,1-dimethyl-2-hydroxyethyl)-2,4,8,10-tetraoxaspiro[5.5]undecane (hereinafter, referred to as "spiroglycol" or "SPG" in some cases) and 1,4-cyclohexanedimethanol (hereinafter, referred to as "CHDM" in some cases) (for example, see Patent Literatures 1 and 2).

### Citation List

### Patent Literature

Patent Literature 1: Japanese Patent Laid-Open No. 2003-183423
Patent Literature 2: Japanese Patent Laid-Open No. 2003-292593
Patent Literature 3: US2010160549A1

### Summary of Invention

### Technical Problem

From the viewpoint of forming stretch-molded articles (for example, stretched films) which are excellent in heat resistance and transparent, besides using a resin having a high Tg, use of a polyester resin exhibiting crystallinity instead of noncrystallinity will be a measures.

For example, in order to improve the crystallinity of a resin to improve the heat resistance thereof, it is also an effective measures to carry out stretch-oriented crystallization at a temperature higher than Tg.

It is to be noted that usual PET has a low Tg and a high crystallization rate, and therefore it is possible to carry out thereon the stretch-oriented crystallization at a temperature higher than Tg with the transparency being retained. In contrast, PET copolymerized with SPG and CHDM has a higher glass transition temperature (Tg) than the usual PET and a low crystallization rate. Hence, the stretch-oriented crystallization cannot be carried out at a temperature higher than Tg, and therefore the PET copolymerized with SPG and CHDM is treated as an amorphous resin.

Meanwhile, for the fields requiring heat resistance, polyester resins having a high glass transition temperature has been used such as poly(1,4-cyclohexanedimethylene terephthalate)(hereinafter, referred to as "PCT" in some cases). However, although being improved in heat resistance, PCT is also high in crystallinity and inferior in transparency.

For example, PCT has a higher Tg than PET and a too high crystallization rate, and thus it is difficult to carry out the fabrication of injection-molded articles and the extrusion with the transparency being retained. For betterment, for example, by modifying the PCT with ethylene glycol (hereinafter, referred to as "EG" in some cases) or isophthalic acid (hereinafter, referred to as "PIA" in some cases), the crystallization rate of PCT can be as low as that of PET. However, despite improved transparency as compared with PET, these modified PCT result in lowered Tg like that of PET along with the lowered crystallization rate, leading to inferior heat resistance.

As described above, polyester resins conventionally used still have room for improvement in points of forming molded articles excellent in the heat resistance and the transparency.

An object of the present invention is, in order to solve the above-mentioned problem, to provide a polyester resin capable of forming a molded article having excellent heat resistance and transparency, and a molded article, a stretched film and a bottle comprising the polyester resin.

Solution to Problem

<1> A polyester resin comprising a dicarboxylic acid constituent unit and a diol constituent unit, wherein more than 0% by mol and 20% by mol or less of the diol constituent unit is a unit originated from a diol having a cyclic acetal skeleton; 70 to 98% by mol of the diol constituent unit is a unit originated from a diol having an alicyclic skeleton; the diol constituent unit comprises a unit originated from ethylene glycol; 80% by mol or more of the dicarboxylic acid constituent unit is a unit originated from terephthalic acid; and the polyester resin has a physical property indicated by the following (A):

(A) the minimum value of the semi-crystallization time is 600 s or less based on a depolarized light intensity method when the polyester resin is melted at 280°C and crystallized at a constant temperature of 150 to 230°C.

<2> The polyester resin according to the above <1>, wherein the diol having a cyclic acetal skeleton is at least one selected from compounds represented by the following formula (1) and formula (2):

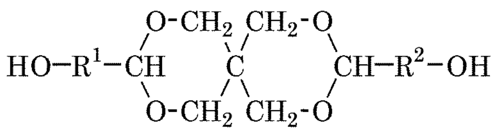

(1)

wherein $R^1$ and $R^2$ each independently denote an aliphatic group having 1 to 10 carbon atoms, an alicyclic group having 3 to 10 carbon atoms, or an aromatic group having 6 to 10 carbon atoms, and

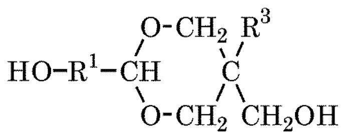

(2)

wherein $R^1$ is the same as in formula (1); and $R^3$ denotes an aliphatic group having 1 to 10 carbon atoms, an alicyclic group having 3 to 10 carbon atoms, or an aromatic group having 6 to 10 carbon atoms.
<3> The polyester resin according to the above <1> or <2>, wherein the diol having a cyclic acetal skeleton is 3,9-bis(1,1-dimethyl-2-hydroxyethyl)-2,4,8,10-tetraoxaspiro[5.5]undecane.
<4> The polyester resin according to any one of the above <1> to <3>, wherein the diol having an alicyclic skeleton is 1,4-cyclohexanedimethanol.
<5> The polyester resin according to any one of the above <1> to <4>, wherein the content of the unit originated from ethylene glycol in the diol constituent unit is 0.1 to 10% by mol.
<6> A molded article comprising a polyester resin according to any one of the above <1> to <5>.
<7> A stretched film comprising a polyester resin according to any one of the above <1> to <5>.
<8> A bottle comprising a polyester resin according to any one of the above <1> to <5>.

Advantageous Effect of Invention

According to the present invention, there can be provided a polyester resin capable of forming a molded article having excellent heat resistance and transparency, and a molded article, a stretched film and a bottle comprising the polyester resin.

Description of Embodiment

Hereinafter, an embodiment to carry out the present invention (hereinafter, referred to simply as "present embodiment") will be described in detail. The following present embodiment is exemplification to interpret the present invention, and does not have the purport of limiting the present invention to the following contents. The present invention can be carried out by being suitably modified within its gist.

«Polyester resin»

A polyester resin of the present embodiment is a polyester resin comprising a dicarboxylic acid constituent unit and a diol constituent unit,

wherein more than 0% by mol and 20% by mol or less of the diol constituent unit is a unit originated from a diol having a cyclic acetal skeleton;
70 to 98% by mol of the diol constituent unit is a unit originated from a diol having an alicyclic skeleton;
the diol constituent unit comprises a unit originated from ethylene glycol;
80% by mol or more of the dicarboxylic acid constituent unit is a unit originated from terephthalic acid; and
the polyester resin has a physical property indicated by the following (A).

(A) The minimum value (hereinafter, referred to simply as "crystallization rate" in some cases) of the semi-crystallization time is 600 s or less based on a depolarized light intensity method when the polyester resin is melted at 280°C and crystallized at a constant temperature of 150 to 230°C.

With the contents of the unit originated from a diol having a cyclic acetal skeleton, the unit originated from a diol having an alicyclic skeleton, and the unit originated from ethylene glycol, in the diol constituent unit being in specific ranges; the content of the unit originated from terephthalic acid in the dicarboxylic acid constituent unit being in a specific range; and the crystallization rate being 600 s or less, the polyester resin of the present embodiment has crystallinity and a high Tg. Further, the polyester resin of the present embodiment can be subjected to stretch-oriented crystallization at a temperature higher than Tg with the transparency being retained. Thereby, by using the polyester resin of the present embodiment, a molded article having excellent heat resistance and transparency can be formed.

<Diol constituent unit>

The polyester resin of the present embodiment comprises at least the following units as the diol constituent unit.

- The unit originated from a diol having a cyclic acetal skeleton: more than 0% by mol and 20% by mol or less
- The unit originated from a diol having an alicyclic skeleton: 70 to 98% by mol
- The unit originated from ethylene glycol

(Unit originated from a diol having a cyclic acetal skeleton)

The polyester resin of the present embodiment has the unit originated from a diol having a cyclic acetal skeleton as the diol constituent unit.

The "diol having a cyclic acetal skeleton" from which the unit is originated is not especially limited, and is preferably, for example, at least one selected from compounds (diols) represented by the following formula (1) and formula (2). When compounds represented by the following formula (1) and formula (2) are used as diols having a cyclic acetal skeleton, the transparency and the heat resistance of an obtained molded article are likely to be more improved.

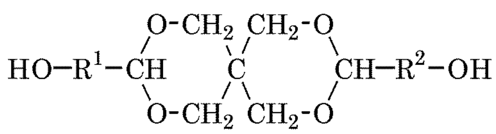 (1)

wherein $R^1$ and $R^2$ each independently denote an aliphatic group having 1 to 10 carbon atoms, an alicyclic group having 3 to 10 carbon atoms, or an aromatic group having 6 to 10 carbon atoms.

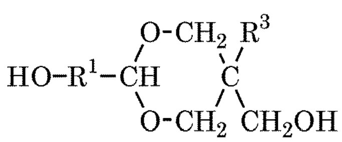 (2)

wherein $R^1$ is the same as in formula (1); and $R^3$ denotes an aliphatic group having 1 to 10 carbon atoms, an alicyclic group having 3 to 10 carbon atoms, or an aromatic group having 6 to 10 carbon atoms.

In formulae (1) and (2), $R^1$ and $R^2$ each independently (in formula (2), only $R^1$) denote an aliphatic group having 1 to 10 carbon atoms, an alicyclic group having 3 to 10 carbon atoms, or an aromatic group having 6 to 10 carbon atoms, and preferably a methylene group, an ethylene group, a propylene group, a butylene group or a structural isomer thereof, for example, an isopropylene group or an isobutylene group.

In formula (2), $R^3$ denotes an aliphatic group having 1 to 10 carbon atoms, an alicyclic group having 3 to 10 carbon atoms, or an aromatic group having 6 to 10 carbon atoms, and preferably a methyl group, an ethyl group, a propyl group, a butyl group or a structural isomer thereof, for example, an isopropyl group or an isobutyl group.

As a diol having a cyclic acetal skeleton represented by formula (1), especially preferable is, for example, 3,9-bis(1,1-dimethyl-2-hydroxyethyl)-2,4,8,10-tetraoxaspiro[5.5]undecane; and as a diol having a cyclic acetal skeleton represented by formula (2), especially preferable is 5-methylol-5-ethyl-2-(1,1-dimethyl-2-hydroxyethyl)-1,3-dioxane. Among these, as the diol having a cyclic acetal skeleton, especially preferable is 3,9-bis(1,1-dimethyl-2-hydroxyethyl)-2,4,8,10-tetraoxaspiro[5.5]undecane (SPG).

(Unit originated from a diol having an alicyclic skeleton)

The polyester resin of the present embodiment has the unit originated from a diol having an alicyclic skeleton as the diol constituent unit. The polyester resin of the present embodiment, due to comprising the unit originated from a diol having an alicyclic skeleton, can be improved in the heat resistance and the crystallinity.

The "diol having an alicyclic skeleton" from which the unit is originated is not especially limited, and examples thereof include diols such as 1,3-cyclohexanedimethanol, 1,4-cyclohexanedimethanol, 1,2-decahydronaphthalenedimethanol, 1,3-decahydronaphthalenedimethanol, 1,4-decahydronaphthalenedimethanol, 1,5-decahydronaphthalenedimethanol, 1,6-decahydronaphthalenedimethanol, 2,6-decahydronaphthalenedimethanol, 2,7-decahydronaphthalenedimethanol, tetralindimethanol, norbornenedimethanol, tricyclodecanedimethanol and pentacyclododecanedimethanol; preferable are 1,4-cyclohexanedimethanol, norbornenedimethanol, tricyclodecanedimethanol and 2,6-decahydronaphthalenedimethanol; and especially preferable is 1,4-cyclohexanedimethanol (CHDM).

(Ethylene glycol)

The diol constituent unit of the present embodiment comprises the unit originated from ethylene glycol. Since the polyester resin of the present embodiment comprises the unit originated from ethylene glycol, when the resin is synthesized, each monomer is easily bonded, whereby the production efficiency can be raised.

(Other diol constituent units)

The polyester resin of the present embodiment may contain other diol constituent units other than the diol unit having a cyclic acetal skeleton, the unit originated from a diol having an alicyclic skeleton, and the unit originated from ethylene glycol. The other diol constituent units can be exemplified by units originated from diols including aliphatic diols such as trimethylene glycol, 1,4-butanediol, 1,5-pentanediol, 1,6-hexanediol, diethylene glycol, propylene glycol and neopentylglycol; polyether compounds such as polyethylene glycol, polypropylene glycol and polybutylene glycol; bisphenols such as 4,4'-(1-methylethylidene)bisphenol, methylenebisphenol (bisphenol F), 4,4'-cyclohexylidenebisphenol (bisphenol Z) and 4,4'-sulfonylbisphenol (bisphenol S); alkylene oxide adducts of the above bisphenols; aromatic dihydroxy compounds such as hydroquinone, resorcinol, 4,4'-dihydroxybiphenyl, 4,4'-dihydroxydiphenyl ether and 4,4'-dihydroxydiphenylbenzophenone; and alkylene oxide adducts of the above aromatic dihydroxy compounds.

(Content of each constituent unit in the diol constituent unit)

The content of the unit originated from a diol having a cyclic acetal skeleton in the whole diol constituent unit is more than 0% by mol and 20% by mol or less. When the content of the unit originated from a diol having a cyclic acetal skeleton is 0% by mol, the heat resistance lowers; and when exceeding 20% by mol, the crystallinity of the polyester resin deteriorates and the heat fixation after stretching becomes difficult. The content of the unit originated from a diol having a cyclic acetal skeleton is, from the viewpoint of the heat resistance and the crystallinity, preferably 8% by mol or more and 20% by mol or less, and more preferably 10.1% by mol or more and 20% by mol or less.

The content of the unit originated from a diol having an alicyclic skeleton in the whole diol constituent unit is 70 to 98% by mol. When the content of the unit originated from a diol having an alicyclic skeleton is less than 70% by mol, the crystallinity of the polyester resin deteriorates and the heat fixation after stretching becomes difficult; when exceeding 98% by mol, since the crystallization rate of the polyester resin is too high, molding with the transparency being retained becomes difficult. The content of the unit originated from a diol having an alicyclic skeleton is, from the viewpoint of the heat resistance and the crystallinity, preferably 70 to 95% by mol, and more preferably 75 to 90% by mol.

When the content of the unit originated from ethylene glycol in the whole diol constituent unit is 0% by mass, it is difficult for each monomer to be bonded when the resin is synthesized, worsening the production efficiency. The content of the unit originated from ethylene glycol is, from the viewpoint of the production efficiency and the crystallinity, preferably 0.1 to 10% by mol, more preferably 0.1 to 8% by mass and especially preferably 0.1 to 5% by mol.

<Dicarboxylic acid constituent unit>

(Unit originated from terephthalic acid)

The polyester resin of the present embodiment comprises 80% by mol or more of the unit originated at least from terephthalic acid as dicarboxylic acid constituent unit. When the content of the unit originated from terephthalic acid in the whole dicarboxylic acid constituent unit is less than 80% by mol, the crystallinity of the polyester resin deteriorates and the heat fixation after stretching becomes difficult. The content of the unit originated from terephthalic acid is, from the viewpoint of the crystallinity, preferably 80 to 100% by mol, more preferably 90 to 100% by mol and especially preferably 95 to 100% by mol.

(Other dicarboxylic acid constituent units)

The dicarboxylic acid constituent unit in the polyester resin of the present embodiment may contain other dicarboxylic acid units other than the unit originated from terephthalic acid.

Examples of the other dicarboxylic acid units, though not limited to the following, include units originated from aliphatic dicarboxylic acids such as succinic acid, glutaric acid, adipic acid, pimelic acid, suberic acid, azelaic acid, sebacic acid, decanedicarboxylic acid, dodecanedicarboxylic acid, cyclohexanedicarboxylic acid, decalindicarboxylic acid, norbornanedicarboxylic acid, tricyclodecanedicarboxylic acid, pentacyclododecanedicarboxylic acid, 3,9-bis(1,1-dimethyl-2-carboxyethyl)-2,4,8,10-tetraoxaspiro[5.5]undecane and 5-carboxy-5-ethyl-2-(1,1-dimethyl-2-carboxyethyl)-1,3-dioxane; and units originated from aromatic dicarboxylic acids such as isophthalic acid, phthalic acid, 2-methylterephthalic acid, 1,4-naphthalenedicarboxylic acid, 1,5-naphthalenedicarboxylic acid, 2,6-naphthalenedicarboxylic acid, 2,7-naphthalenedicarboxylic acid, biphenyldicarboxylic acid and tetralindicarboxylic acid.

<Other constituent units>

The polyester resin of the present embodiment may contain, in the range of not impairing the object of the present embodiment, monoalcohol units such as butyl alcohol, hexyl alcohol and octyl alcohol, tri- or more polyhydric alcohol units such as trimethylolpropane, glycerol, 1,3,5-pentanetriol and pentaerythritol, monocarboxylic acid units such as benzoic acid, propionic acid and bytyric acid, polyvalent carboxylic acid units such as trimellitic acid and pyromellitic acid, and oxy acid units such as glycolic acid, lactic acid, hydroxybutyric acid, 2-hydroxyisobutyric acid and hydroxybenzoic acid.

In the case where the polyester resin of the present embodiment contains the other constituent units other than the diol constituent unit and the dicarboxylic acid constituent unit, from the viewpoint of sufficiently exhibiting the advantageous effect of the present invention, the content of the other constituent units is, with respect to the whole of the polyester resin, preferably 3.0% by mass or less and more preferably 1.0% by mass or less.

<Polyester resin>

Further, the molar ratio [O/C] of the diol constituent unit (O) and the dicarboxylic acid constituent unit (C) in the polyester resin of the present embodiment is, from the viewpoint of the heat resistance and the crystallinity, preferably 90/100 to 110/100, more preferably 95/100 to 105/100 and especially preferably 99/100 to 101/100.

The weight-average molecular weight of the polyester resin of the present embodiment is not especially limited, and is, from the viewpoint of the heat resistance and the impact resistance, preferably 10,000 to 200,000, more preferably 20,000 to 150,000 and especially preferably 30,000 to 100,000. The weight-average molecular weight can be measured, for example, by gel permeation chromatography (GPC) using monodisperse polystyrenes as standard substances.

A method for producing the polyester resin of the present embodiment is not especially limited, and a conventionally well-known method can be applied. Examples thereof include melt polymerization methods or solution polymerization methods including a transesterification process, a direct esterification process and the like. With regard to transesterification catalysts, esterification catalysts, etherification inhibitors, various types of stabilizers such as heat stabilizers and light stabilizers, polymerization regulators, and the like, those conventionally well-known can be used.

The polyester resin of the present embodiment is not especially limited, and includes combinations of the diol constituent unit (the unit originated from spiroglycol (SPG), the unit originated from 4-cycloheanedimethanol (CHDM)

and the unit originated from ethylene glycol (EG)) and the dicarboxylic acid constituent unit (the unit originated from terephthalic acid).

(Physical property)

The polyester resin of the present embodiment has a physical property (crystallization rate) indicated by the following (A).

(A) The minimum value of the semi-crystallization time is 600 s or less based on a depolarized light intensity method when the polyester resin is melted at 280°C and crystallized at a constant temperature of 150 to 230°C.

With the polyester resin of the present embodiment wherein the minimum value of the semi-crystallization time is 600 s or less, stretch-oriented crystallization can be carried out at a temperature higher than Tg of the resin with the transparency being retained, and sufficient crystallinity can be exhibited.

The semi-crystallization time specified in the expression (A) is determined, specifically, by making the polyester resin into a sheet shape, interposing the sheet between cover glasses, melting the sheet at 280°C for 6 min, thereafter put the resultant in a crystallization bath at a predetermined temperature, and measuring change with time in the depolarized light intensity to determine a semi-crystallization time of the temperature. With regard to the minimum value of the semi-crystallization time, the temperature of the crystallization bath is varied from 150 to 230°C at intervals of 10°C and semi-crystallization times when constant-temperature crystallization occurs are measured; and the minimum value out of the times is taken as the semi-crystallization time (s) of the resin.

The crystallization rate of the polyester resin of the present embodiment is not especially limited, and is, from the viewpoint of the crystallinity of the resin, the heat resistance of obtained molded articles, and carrying out the fabrication of injection molded articles and the extrusion with the transparency being retained, preferably 20 to 600 s, more preferably 25 to 500 s and especially preferably 30 to 400 s.

The glass transition temperature (Tg) of the polyester resin of the present embodiment is not especially limited, and is preferably 91°C or higher, more preferably 95°C or higher and still more preferably 100°C or higher.

In the case where the glass transition temperature is in the above range, the polyester resin of the present embodiment is likely to be better in the heat resistance. Therefore, the polyester resin can be used in applications requiring high heat resistance which cannot be met by conventional PET and modified PET partially copolymerized with 1,4-cyclohexanedimethanol or isophthalic acid. For example, the polyester resin can be used in cars and ship holds (the temperature of which is said to reach 70 to 80°C) crossing the equator, and thus can suitably be used for interiors of cars, containers for aromatics, eyedrops and the like used in cars, and packing materials to be used for export/import such as blister packs. Further, the polyester resin can also suitably be used in applications to be subjected to high-temperature treatment, such as food packing materials to be subjected to microwave oven heating or retort treatment, and containers such as nursing bottles and tableware to be subjected to heat sterilization. The glass transition temperature can be measured based on a method described in Examples described later. The glass transition temperature can be regulated in the above-mentioned preferable range, for example, by suitable selection of the dicarboxylic acid constituent unit and the diol constituent unit in the polyester resin of the present embodiment based on the above-mentioned preferable aspect.

Then, the heat quantity of a crystallization peak during temperature fall of the polyester resin of the present embodiment is preferably 15 J/g or more, and more preferably 20 J/g or more. The upper limit of the heat quantity of the crystallization peak during temperature fall is not especially limited, and the range of the heat quantity of the crystallization peak during temperature fall is preferably 15 to 50 J/g and more preferably 20 to 50 J/g. The heat quantity of the crystallization peak during temperature fall can be measured by using a differential scanning colorimeter, and for example, putting about 10 mg of a sample in an aluminum unsealed container and heating the sample at a temperature-rise rate of 20°C/min in a nitrogen gas flow (30 mL/min) while measuring the temperature of the sample and taking, as the glass transition temperature, a temperature on a DSC curve at which the temperature thereof changes by 1/2 of the difference between baselines before and after the transition on the DSC curve, thereafter, holding the temperature of the sample at 280°C for 1 min and measuring the area of an exothermic peak emerging when the temperature is made to fall at a temperature-fall rate of 10°C/min to calculate the heat quantity of the crystallization peak during temperature fall from the area.

The haze of a biaxially stretched film of 40 μm in thickness obtained by extruding the polyester resin composition of the present embodiment is preferably 1.0% or less and more preferably 0.5% or less. In the case where the haze is in the above range, the polyester resin of the present embodiment is likely to exhibit higher transparency. The haze can be measured based on a method described in Examples described later. The haze can be regulated in the above-mentioned preferable range, for example, by suitable selection of the dicarboxylic acid constituent unit and the diol constituent unit in the polyester resin based on the above-mentioned preferable aspect.

[Optional components]

The polyester resin of the present embodiment may be used as a polyester resin composition containing optional components. The optional components are not limited to the following, but there can be added, for example, various types of additives such as antioxidants, light stabilizers, ultraviolet absorbents, plasticizers, extenders, matting agents, drying regulators, antistatic agents, antisettling agents, surfactants, flow improvers, drying oils, waxes, fillers, colorants, reinforcers, surface smoothing agents, leveling agents and curing reaction accelerators, and molding auxiliary agents. Further as other optional components, there may be contained resins such as polyolefin resins, polyester resins other than the polyester resin of the present embodiment, polyamide resins, polycarbonate resins, acrylonitrile resins, vinyl chloride resins, vinyl acetate resins, polyacrylic acid resins, polymethacrylic acid resins, polystyrene, ABS resins, polyimide resins and AS resins, and oligomers thereof. The content of the optional components is not especially limited, and from the viewpoint of securing good heat resistance and transparency, is made to be, with respect to 100% by mass of the polyester resin composition, preferably 2.9% by mass or less, more preferably 1.0% by mass or less and especially preferably 0.5 % by mass or less.

<Applications of the polyester resin>

The polyester resin of the present embodiment and molded articles comprising the polyester resin can be used in various applications. For example, the molded articles comprising the polyester resin can be formed by using the polyester resin.

As described above, since the crystallization rate (minimum value of the semi-crystallization time) of the polyester resin of the present embodiment is 600 s or less, it is possible to carry out the stretch-oriented crystallization at a temperature higher than Tg with the transparency being retained. When a molded article formed by using the polyester resin is stretched, molecules are oriented and characteristic crystallization called oriented crystallization is caused, and the molded article can be made into a molded article greatly improved in thermal properties and the like. The stretch-oriented crystallization to be carried out at a temperature higher than the Tg can be carried out, for example, by subjecting a molded article such as an unstretched sheet to simultaneous biaxial stretching at a temperature higher by 10 to 30°C than the glass transition temperature to stretch ratios of, for example, 3.5 $\times$ 3.5 times, and thereafter subjecting the resultant to heat fixation treatment at 210 to 230°C for 10 to 30 s.

Sheets formed by using the polyester resin of the present embodiment may be of a single layer or a multilayer; and films thereof may also be of a single layer or a multilayer, may be unstretched ones, or may be uniaxially or biaxially stretched ones, or may be laminated on steel sheets or the like.

A method of obtaining stretched films comprising the polyester resin of the present embodiment is not especially limited, and the stretched films can be formed by forming films of the polyester resin by a well-known method such as extrusion or calendering, stretching the films uniaxially to 1.1 to 7 times, preferably 2 to 6 times, especially preferably 2.5 to 5 times and stretching the films, in the direction orthogonal to the uniaxial direction, to 1.1 to 7 times, preferably 2 to 6 times, especially preferably 2.5 to 5 times. Applicable means of stretching for stretched films include roll stretching, long gap stretching and tenter stretching, and there can be applied methods using a flat form, a tube form or the like as film shapes in stretching. Further, the stretching can be carried out by serial biaxial stretching, simultaneous biaxial stretching, uniaxial stretching or a combination thereof. The heat set in these stretchings can be carried out by passing object films through a heating zone of 30 to 240°C for 1 to 30 s.

As described above, the polyester resin of the present embodiment can be used, for example, for injection-molded articles, extruded articles such as sheets, films (insulating films) and pipes, thermoformed articles such as containers, bottles, foams, pressure-sensitive adhesives, adhesives, coating materials and the like. In more detail, the injection-molded articles may also be by insert molding or two color molding. The films may also be by inflation molding. The containers may also be molded articles obtained by thermoforming sheets and films by vacuum molding, pressure molding, vacuum and pressure molding or press molding. The bottles may be direct blow bottles or injection blow bottles, or may also be by injection molding. In particular, since molded articles formed by using the polyester resin of the present embodiment are excellent in the transparency, the heat resistance and the repeated fatigue characteristic, the bottles comprising the polyester resin can suitably be used, for example, as bottles needing repetitive use. The foams may be bead foams or extruded foams. The polyester resin of the present embodiment can suitably be used particularly in applications requiring high heat resistance, such as products to be used in cars, packing materials for export/import, food packing materials to be subjected to retort treatment or microwave oven heating, and containers such as nursing bottles and tableware to be subjected to heat sterilization. Further, the polyester resin of the present embodiment can suitably be used for packing materials for containers requiring the UV barrier property. That is, a polyester injection-molded article, a polyester extruded article, a polyester foam, a polyester container, a polyester bottle, a polyester tableware and a polyester nursing bottle according to the present embodiment each can be said to comprise the polyester resin composition of the present embodiment. These are not especially limited as long as comprising the polyester resin

of the present embodiment, and can be made into various types of well-known forms according to corresponding applications.

Examples

Hereinafter, the present embodiment will be described in more detail by way of Examples, but the scope of the present embodiment is not any more limited to these Examples.

1. Production of a polyester resin

[Example 1]

7,919 g of dimethyl terephthalate (DMT), 1,786 g of ethylene glycol (EG), 1,900 g of spiroglycol (SPG), 5,535 g of 1,4-cyclohexanedimethanol, 1.3879 g of titanium tetrabutoxide (TBT) and 0.8005 g of potassium acetate (K Acetate) were charged in a 30-L polyester resin production apparatus equipped with a partial condenser, a total condenser, a cold trap, a stirrer with a torque detection device, a heating device and a nitrogen introducing tube; and while the temperature was raised up to 225°C, transesterification was carried out by an ordinary method.

Then, after the amount of methanol formed and distillated by the transesterification became 90% of a theoretical amount, 2.3777 g of antimony trioxide ($Sb_2O_3$) and 3.7412 g of triethyl phosphate (TEP) were added to the reaction liquid. Thereafter, the pressure was reduced down to 13.3 kPa over 1 hour with the reaction liquid being held at 225°C; thereafter, the temperature was raised up to 280°C and the pressure was reduced down to 130 Pa over 1 hour to carry out polycondensation reaction. Then, the stirring speed was gradually reduced from 100 rpm and when the stirring speed became 15 rpm and the torque of the stirrer became 140 N-m, the reaction was finished to thereby obtain about 8 kg of a polyester resin as pellets.

[Other Examples and Comparative Examples]

Pellets of polyester resins were obtained as in Example 1, except for altering the amounts of SPG, CHDM, EG, DMT, TBT, K Acetate, TEP and $Sb_2O_3$ charged according to the following Table. Here, although in Example 1, after the amount of methanol formed and distillated by the transesterification became 90% of a theoretical amount, antimony trioxide ($Sb_2O_3$) and triethyl phosphate (TEP) were added, in Example 3, germanium dioxide ($GeO_2$) was added together with triethyl phosphate (TEP) to the reaction liquid according to the following Table.

[Table 1]

| | SPG | CHDM | EG | DMT | TBT | K Acetate | TEP | $Sb_2O_3$ | $GeO_2$ |
|---|---|---|---|---|---|---|---|---|---|
| Example 1 | 1900 | 5535 | 1786 | 7919 | 1.3879 | 0.8005 | 3.7412 | 2.3777 | 0 |
| Example 2 | 1075 | 5873 | 2087 | 8404 | 1.4728 | 0.8495 | 3.9414 | 2.5232 | 0 |
| Example 3 | 1651 | 5896 | 1693 | 7939 | 1.3914 | 0.8026 | 3.7235 | 0 | 1.0692 |
| Comparative Example 1 | 3043 | 4322 | 1898 | 7611 | 1.3339 | 0.7694 | 3.5697 | 2.2852 | 0 |
| Comparative Example 2 | 6898 | 1076 | 1674 | 6161 | 1.0797 | 0.6228 | 2.8894 | 1.8497 | 0 |
| Comparative Example 3 | 1082 | 0 | 6264 | 11272 | 1.9754 | 1.1394 | 5.2864 | 3.3842 | 0 |
| Comparative Example 4 | 4900 | 2974 | 1638 | 6808 | 1.1931 | 0.6882 | 3.1928 | 2.0439 | 0 |
| | | | | | | | | | (g) |

Here, Comparative Example 5 and Comparative Example 6 used the following commercially available resins.

Comparative Example 5: product name "UNIPET RT553C" (manufactured by Nihon Yunipet Inc.)
Comparative Example 6: product name "Eastar BR203" (manufactured by Eastman Chemical Co.)

2. Evaluation of the resins

(Copolymerization ratio of the diol having a cyclic acetal skeleton)

For each of the polyester resins, (1) copolymerization ratios, in the diol constituent unit, of the unit (SPG) originated from a diol having a cyclic acetal skeleton, the unit (CHDM) originated from an alicyclic diol, and (2) in the dicarboxylic acid constituent unit, of the unit (EG) originated from ethylene glycol, and copolymerization ratios, in the dicarboxylic acid unit, of the unit (PTA) of terephthalic acid and isophthalic acid (PIA), were calculated by $^1$H-NMR measurement. A measuring apparatus used was "Ascend™ 500", manufactured by Bruker Biospin GmbH. A solvent used was deuterated chloroform. Here, in the case where a resin was insoluble to deuterated chloroform, the resin was dissolved in deuterated chloroform by using a few drops of trifluoroacetic acid.

(Semi-crystallization time)

The pellets fabricated in each of Examples and Comparative Examples were crushed and made into a sheet form, and melted at 280°C; then, the semi-crystallization time when crystallization was carried out at a constant temperature of 150 to 230°C was measured based on a depolarized light intensity method. Specifically, the semi-crystallization time was determined by interposing the sheet between cover glasses, melting the sheet at 280°C for 6 min, thereafter put the resultant in a crystallization bath at a predetermined temperature, and measuring change with time in the depolarized light intensity to determine a semi-crystallization time of the temperature. The temperature of the crystallization bath was varied from 150 to 230°C at intervals of 10°C and semi-crystallization times when constant-temperature crystallization occurs were measured; and the minimum value out of the times was taken as the semi-crystallization time (s) of the resin. The results are shown in Table 2. In Table 2, the case where the minimum value of the semi-crystallization time was less than 600 s was evaluated as "A", and the case of 600 s or more was evaluated as "C".

(The glass transition temperature and the crystallization exothermic peak during temperature fall)

The glass transition temperature (Tg) of a polyester resin was measured by using a differential scanning colorimeter (type: DSC/TA-50WS), manufactured by Shimadzu Corp., and by putting about 10 mg of a sample in an aluminum unsealed container and heating the sample at a temperature-rise rate of 20°C/min in a nitrogen gas flow (30 mL/min); and a temperature on a DSC curve at which the temperature thereon changed by 1/2 of the difference between baselines before and after the transition on the DSC curve was taken as the glass transition temperature. The results are shown in Table 2. In the Table, the case where Tg was 100°C or higher was evaluated as "A"; and the case of lower than 100°C was evaluated as "C".

After the temperature of the sample was held at 280°C for 1 min after the above measurement of the glass transition temperature, the crystallization exothermic peak during temperature fall was measured from an area of an exothermic peak emerging when the temperature was made to fall at a temperature-fall rate of 10°C/min.

3. Fabrication of biaxially stretched films

By using the pellets of a polyester resin obtained in each of Examples and Comparative Examples, an unstretched sheet of about 0.5 mm in thickness was fabricated by extrusion under the conditions of a cylinder temperature of 250 to 290°C, a die temperature of 250 to 290°C, and a roll temperature of 75 to 100°C.

Then, the unstretched sheet was subjected to simultaneous biaxial stretching to 3.5 × 3.5 times at a temperature higher by 10 to 30°C than the glass transition temperature, and thereafter subjected to heat fixation treatment at 210 to 230°C for 10 to 30 s to thereby obtain a biaxially stretched film of 40 μm in thickness.

4. Evaluation of the biaxially stretched films

(The heat resistance (heat shrinkage rate))

The biaxially stretched films obtained in the above 3. were each cut into a size of 10 mm in width and 150 mm in length in the direction of the length side (150 mm) identical to the longitudinal direction of the film, and marked at an interval of 100 mm. The interval (interval A) between the marks was measured under a constant tensile force (in the longitudinal direction) of 5.8 g. Then, the film was left under no load in an oven of a 200°C atmosphere for 30 min. The film was taken out from the oven, and cooled to room temperature; thereafter, the interval (interval B) between the marks was determined under a constant tensile force (in the longitudinal direction) of 5.8 g, and the heat shrinkage rate (MD) was calculated from the following expression. The results are shown in Table 2. In the Table, the case where the heat

shrinkage rate was less than 6% was evaluated as "A"; and the case of 6% or more was evaluated as "C".

$$\text{Heat shrinkage rate (\%)} = [(A - B)/A] \times 100$$

(The haze)

The haze (%) of the biaxially stretched films (thickness: 40 μm) each obtained in the above 3. was measured by using a haze meter (type: COH-300A), manufactured by Nippon Denshoku Industries Co., Ltd according to JIS K7105 and ASTM D1003. The results are shown in Table 2.

[Table 2]

| | Composition | | | | | Crystallinity | | | Tg | | Heat resistance MD | | Transparency |
|---|---|---|---|---|---|---|---|---|---|---|---|---|---|
| | Diol constituent unit | | | Dicarboxylic acid constituent unit | | Evaluation | Semi-crystallization time [s] | DSC | Evaluation | Tg [°C] | Evaluation | Heat shrinkage rate [%] | HAZE [%] |
| | SPG | CHDM | EG | PTA | PIA | | | | | | | | |
| | [mol%] | [mol%] | [mol%] | [mol%] | [mol %] | Semi-crystallization time, less than 600: A | (Minimum) | Heat quantity of crystallization peak during temperature fall [J/g] | Tg, 100°C or higher: A | | Heat shrinkage rate, less than 6%: A | 200°C *30min | |
| Example 1 | 14 | 84 | 2 | 100 | 0 | A | 93 | 25 | A | 102 | A | 5.4% | 0.3 |
| Example 2 | 8 | 87 | 5 | 100 | 0 | A | 34 | 29 | A | 100 | A | 5.9% | 0.5 |
| Example 3 | 13 | 85 | 2 | 100 | 0 | A | 98 | 24 | A | 102 | A | 5.5% | 0.4 |
| Comparative Example 1 | 24 | 66 | 10 | 100 | 0 | C | 1379 | 0 | A | 106 | C | unmeasurable | unmeasurable |
| Comparative Example 2 | 70 | 20 | 10 | 100 | 0 | C | 3402 | 0 | A | 122 | C | unmeasurable | unmeasurable |
| Comparative Example 3 | 6 | 0 | 94 | 100 | 0 | A | 333 | 0 | C | 86 | C | 10.1% | 0.3 |
| Comparative Example 4 | 45 | 50 | 5 | 100 | 0 | C | >3600 | 0 | A | 112 | C | unmeasurable | unmeasurable |
| Comparative Example 5 | 0 | 0 | 100 | 100 | 0 | A | 51 | 31 | C | 81 | C | 9.3% | 0.5 |
| Comparative Example 6 | 0 | 100 | 0 | 73 | 27 | A | 303 | 0 | C | 90 | C | 13.3% | 0.3 |

As is clear from the above Table, the polyester resins of Examples had a high TG and a crystallization rate of less than 600 s, and were excellent in the transparency even when the stretch-oriented crystallization was carried out at a temperature higher than Tg.

By contrast, any of the polyester resins of Comparative Examples 1, 2 and 4 containing SPG, CHDM and EG and having, in the diol constituent unit, a copolymerization ratio of SPG of more than 20% by mol and a copolymerization ratio of CHDM of less than 70% by mol, was amorphous. Hence, when the stretch-oriented crystallization was carried out at a temperature higher than Tg, the heat fixation after the simultaneous biaxial stretching was not able to be carried out and no film was made.

Although the polyester resin of Comparative Example 3, which contained SPG and EG, but no CHDM, Comparative Example 5 (PET) composed of EG and PTA, and Comparative Example 6 being PCT modified with isophthalic acid, were crystalline resins, they were low in Tg and inferior in the heat resistance.

Industrial Applicability

The polyester resin of the present invention is excellent in the heat resistance and the transparency, and can suitably be used in applications requiring high heat resistance, such as stretched films, bottles to be used repeatedly, and besides, products to be used in cars, packing materials for export/import, food packing materials to be subjected to retort treatment or microwave oven heating, and containers such as nursing bottles and tableware to be subjected to heat sterilization; thus, the industrial significance of the present invention is enormous.

The entire contents of the disclosure of Japanese Patent Application No. 2019-131846, are referenced.

## Claims

1. A polyester resin, comprising: a dicarboxylic acid constituent unit; and a diol constituent unit,

   wherein more than 0% by mol and 20% by mol or less of the diol constituent unit is a unit originated from a diol having a cyclic acetal skeleton;
   70 to 98% by mol of the diol constituent unit is a unit originated from a diol having an alicyclic skeleton;
   the diol constituent unit comprises a unit originated from ethylene glycol;
   80% by mol or more of the dicarboxylic acid constituent unit is a unit originated from terephthalic acid; and
   the polyester resin has a physical property indicated by the following (A):

   (A) a minimum value of a semi-crystallization time is 600 s or less based on a depolarized light intensity method when the polyester resin is melted at 280°C and crystallized at a constant temperature of 150 to 230°C.

2. The polyester resin according to claim 1, wherein the diol having a cyclic acetal skeleton is at least one selected from compounds represented by the following formula (1) and formula (2):

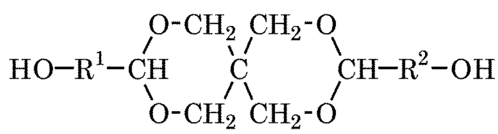

(1)

wherein $R^1$ and $R^2$ each independently denote an aliphatic group having 1 to 10 carbon atoms, an alicyclic group having 3 to 10 carbon atoms, or an aromatic group having 6 to 10 carbon atoms, and

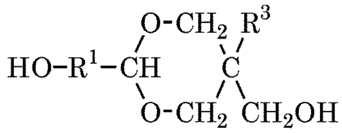

(2)

wherein $R^1$ is the same as in formula (1); and $R^3$ denotes an aliphatic group having 1 to 10 carbon atoms, an alicyclic group having 3 to 10 carbon atoms, or an aromatic group having 6 to 10 carbon atoms.

3. The polyester resin according to claim 1 or 2, wherein the diol having a cyclic acetal skeleton is 3,9-bis(1,1-dimethyl-2-hydroxyethyl)-2,4,8,10-tetraoxaspiro[5.5]undecane.

4. The polyester resin according to any one of claims 1 to 3, wherein the diol having an alicyclic skeleton is 1,4-cyclohexanedimethanol.

5. The polyester resin according to any one of claims 1 to 4, wherein a content of the unit originated from ethylene glycol in the diol constituent unit is 0.1 to 10% by mol.

6. A molded article comprising a polyester resin according to any one of claims 1 to 5.

7. A stretched film comprising a polyester resin according to any one of claims 1 to 5.

8. A bottle comprising a polyester resin according to any one of claims 1 to 5.

**Patentansprüche**

1. Ein Polyesterharz, umfassend: eine konstituierende Dicarbonsäureeinheit; und eine konstituierende Dioleinheit,

wobei mehr als 0 Mol-% und 20 Mol-% oder weniger der konstituierenden Dioleinheit eine Einheit ist, die von einem Diol mit einem cyclischen Acetalgerüst stammt;
70 bis 98 Mol-% der konstituierenden Dioleinheit eine Einheit ist, die von einem Diol mit einem alicylischen Gerüst stammt;
die konstituierende Dioleinheit eine Einheit umfasst, die von Ethylenglycol stammt;
80 Mol-% oder mehr der konstituierenden Dicarbonsäureeinheit eine Einheit ist, die von Terephthalsäure stammt; und
das Polyesterharz eine physikalische Eigenschaft besitzt, die durch das nachstehende (A) beschrieben ist:

(A) ein Minimalwert einer Semikristallisationszeit beträgt 600 s oder weniger, bezogen auf ein Verfahren basierend auf der Intensität depolarisierten Lichts, wenn das Polyesterharz bei 280 °C geschmolzen und bei einer konstanten Temperatur von 150 bis 230 °C kristallisiert wird.

2. Das Polyesterharz gemäß Anspruch 1, wobei das Diol mit einem cyclischen Acetalgerüst mindestens Eines ist, ausgewählt aus Verbindungen, dargestellt durch die nachstehende Formel (1) und Formel (2):

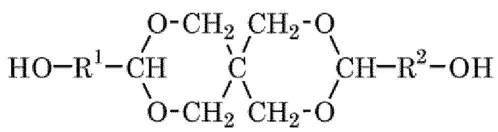

(1)

wobei $R^1$ und $R^2$ jeweils unabhängig eine aliphatische Gruppe mit 1 bis 10 Kohlenstoffatomen, eine alicyclische Gruppe mit 3 bis 10 Kohlenstoffatomen oder eine aromatische Gruppe mit 6 bis 10 Kohlenstoffatomen bezeichnen und

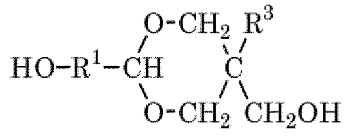

(2)

wobei $R^1$ gleich wie in Formel (1) ist; und $R^3$ eine aliphatische Gruppe mit 1 bis 10 Kohlenstoffatomen, eine alicyclische Gruppe mit 3 bis 10 Kohlenstoffatomen oder eine aromatische Gruppe mit 6 bis 10 Kohlenstoffatomen bezeichnet.

3. Das Polyesterharz gemäß Anspruch 1 oder 2, wobei das Diol mit einem cyclischen Acetalgerüst 3,9-Bis(1,1-dimethyl-2-hydroxyethyl)-2,4,8,10-tetraoxaspiro[5.5]undecan ist.

**4.** Das Polyesterharz gemäß einem der Ansprüche 1 bis 3, wobei das Diol mit einem alicyclischen Gerüst 1,4-Cyclohexandimethanol ist.

**5.** Das Polyesterharz gemäß einem der Ansprüche 1 bis 4, wobei ein Gehalt der von Ethylenglycol stammenden Einheit in der konstituierenden Dioleinheit 0,1 bis 10 Mol-% beträgt.

**6.** Ein geformter Gegenstand, umfassend ein Polyesterharz gemäß einem der Ansprüche 1 bis 5.

**7.** Eine Streckfolie, umfassend ein Polyesterharz gemäß einem der Ansprüche 1 bis 5.

**8.** Eine Flasche, umfassend ein Polyesterharz gemäß einem der Ansprüche 1 bis 5.

## Revendications

**1.** Résine de polyester comprenant : un motif constitutif acide dicarboxylique ; et un motif constitutif diol,

dans laquelle plus de 0 % en moles et 20 % en moles ou moins du motif constitutif diol est un motif issu d'un diol ayant un squelette d'acétal cyclique ;
70 à 98 % en moles du motif constitutif diol est un motif issu d'un diol ayant un squelette alicyclique ;
le motif constitutif diol comprend un motif issu d'éthylène glycol ;
80 % en moles ou plus du motif constitutif acide dicarboxylique est un motif issu d'acide téréphtalique ; et
la résine de polyester a la propriété physique indiquée par (A) qui suit :

(A) la valeur minimale du temps de semi-cristallisation est de 600 s ou moins sur la base d'une méthode à intensité d'une lumière dépolarisée quand la résine de polyester est fondue à 280 °C et cristallisée à une température constante de 150 à 230 °C.

**2.** Résine de polyester selon la revendication 1, dans laquelle le diol ayant un squelette d'acétal cyclique est au moins l'un choisi parmi les composés représentés par la formule (1) et la formule (2) suivantes :

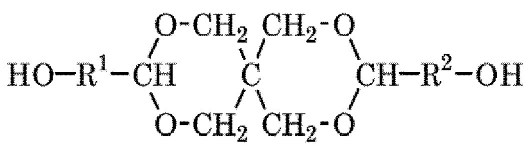

(1)

dans laquelle chacun de $R^1$ et $R^2$ désigne indépendamment un groupe aliphatique ayant 1 à 10 atomes de carbone, un groupe alicyclique ayant 3 à 10 atomes de carbone, ou un groupe aromatique ayant 6 à 10 atomes de carbone, et

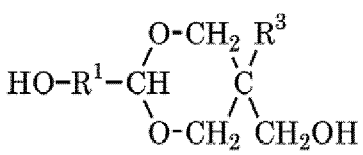

(2)

dans laquelle $R^1$ est tel que dans la formule (1) ; et $R^3$ désigne un groupe aliphatique ayant 1 à 10 atomes de carbone, un groupe alicyclique ayant 3 à 10 atomes de carbone, ou un groupe aromatique ayant 6 à 10 atomes de carbone.

**3.** Résine de polyester selon la revendication 1 ou 2, dans laquelle le diol ayant un squelette d'acétal cyclique est le 3,9-bis(1,1-diméthyl-2-hydroxyéthyl)-2,4,8,10-tétraoxaspiro[5.5]undécane.

**4.** Résine de polyester selon l'une quelconque des revendications 1 à 3, dans laquelle le diol ayant un squelette alicyclique est le 1,4-cyclohexanediméthanol.

**5.** Résine de polyester selon l'une quelconque des revendications 1 à 4, dans laquelle la teneur en le motif issu d'éthylène glycol dans le motif constitutif diol est de 0,1 à 10 % en moles.

**6.** Article moulé comprenant une résine de polyester selon l'une quelconque des revendications 1 à 5.

**7.** Film étiré comprenant une résine de polyester selon l'une quelconque des revendications 1 à 5.

**8.** Bouteille comprenant une résine de polyester selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003183423 A
- JP 2003292593 A
- US 2010160549 A1
- JP 2019131846 A